(19) Europäisches Patentamt
European Patent Office
Office européen des brevets

(11) **EP 3 658 955 B1**

(12) **EUROPÄISCHE PATENTSCHRIFT**

(45) Veröffentlichungstag und Bekanntmachung des Hinweises auf die Patenterteilung:
**08.09.2021** **Patentblatt 2021/36**

(51) Int Cl.:
**G01S 15/931** *(2020.01)* **G01S 7/527** *(2006.01)*

(21) Anmeldenummer: **18739869.8**

(86) Internationale Anmeldenummer:
**PCT/EP2018/069507**

(22) Anmeldetag: **18.07.2018**

(87) Internationale Veröffentlichungsnummer:
**WO 2019/020457 (31.01.2019 Gazette 2019/05)**

(54) **VERFAHREN ZUR ERKENNUNG MINDESTENS EINES IM UMFELD EINES FAHRZEUGS BEFINDLICHEN OBJEKTS**

METHOD FOR RECOGNIZING AT LEAST ONE OBJECT IN THE VICINITY OF A VEHICLE

PROCÉDÉ DE DÉTECTION D'AU MOINS UN OBJET SE TROUVANT DANS L'ENVIRONNEMENT D'UN VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.07.2017 EP 17183693**

(43) Veröffentlichungstag der Anmeldung:
**03.06.2020 Patentblatt 2020/23**

(73) Patentinhaber: **Elmos Semiconductor SE 44227 Dortmund (DE)**

(72) Erfinder: **SPIEGEL, Egbert 44227 Dortmund (DE)**

(74) Vertreter: **dompatent von Kreisler Selting Werner - Partnerschaft von Patent- und Rechtsanwälten mbB Deichmannhaus am Dom Bahnhofsvorplatz 1 50667 Köln (DE)**

(56) Entgegenhaltungen:
**WO-A1-2012/016834 WO-A1-2014/108300 DE-A1- 4 433 957 DE-A1-102011 085 286 DE-A1-102011 088 346 DE-A1-102012 015 967 US-A1- 2012 314 541**

**Beschreibung**

Die Erfindung betrifft ein Verfahren zur Erkennung mindestens eines im Umfeld eines Fahrzeugs befindlichen Objekts anhand des Empfangs von von einem Sender ausgesandten und von dem Objekt reflektierten Ultraschallsignalen.

Die Anforderungen an die Genauigkeit und Zuverlässigkeit der Objekterkennung im Umfeld eines Fahrzeugs mittels Ultraschallmessvorrichtungen werden immer größer. Insbesondere sollen Störsignale zuverlässig erkannt werden.

Aus WO-A-2012/016834 A1, WO-A-2014/108300 A1, DE-A-44 33 957, DE-A-10 2012 015 967 und DE-A-10 2011 085286 sind diverse Verfahren und Vorrichtungen zur Verarbeitung von insbesondere Ultraschallsignalen unter anderem zur Hinderniserkennung bekannt. Die schaltungs- bzw. softwaretechnischen Realisierungen all dieser Verfahren gestaltet sich aber mitunter problematisch.

US-A-2012/314541 und DE-A-10 2011 088 346 offenbaren im Zusammenhang mit der Objekterfassung in Umfeld eines Fahrzeugs eine I/Q-Demodulation des Empfangssignals mit anschließender Filterung mittels einer Bank von Optimalfiltern.

Aufgabe der Erfindung ist es, ein insoweit verbessertes Verfahren zur Erkennung mindestens eines im Umfeld eines Fahrzeugs befindlichen Objekts anzugeben, das sich schaltungs- und/oder softwaretechnisch auf einfache Art und Weise realisieren lässt.

Zur Lösung dieser Aufgabe wird mit der Erfindung ein Verfahren zur Erkennung mindestens eines im Umfeld eines Fahrzeugs befindlichen Objekts anhand des Empfangs von von einem Sender ausgesandten und von dem Objekt reflektierten Ultraschallsignalen vorgeschlagen, wobei bei dem Verfahren

- mindestens ein Ultraschallsender und ein diesem zugeordneter Ultraschallempfänger bereitgestellt wird,
- der Ultraschallsender ein Ultraschallendesignal aussendet,
- der Ultraschallempfänger ein Ultraschallempfangssignal empfängt,
- das Ultraschallempfangssignal mit dem Ultraschallendesignal korreliert wird und ein Korrelationsfaktor ermittelt wird, indem

  - das Ultraschallempfangssignal einer I/Q-Demodulation unterzogen wird, bei der ein komplexes Signal mit einem Realteil-Signal (I) und einem Imaginärteil-Signal (Q) entsteht, von denen jedes zur Bildung eines Hüllkurvensignals mittels eines ersten Optimalfilters gefiltert wird, woraufhin unter Verwendung der gefilterten Realteil- und Imaginärteil-Signale (I, Q) eine Betragsbildung erfolgt,
  - zusätzlich sowohl das Realteil-Signal (I) als auch das Imaginärteil-Signal (Q) jeweils normiert wird,

  - sowohl das normierte Realteil-Signal (I') als auch das normierte Imaginärteil-Signal (Q') mittels eines zweiten Optimalfilters gefiltert wird, wobei die ersten und zweiten Optimalfilter im Wesentlichen identisch sind, und
  - der Korrelationsfaktor als Betrag des komplexen Signals aus den normierten Realteil- und Imaginärteil-Signalen (I', Q') ermittelt wird, und

- anhand der Größe des Korrelationsfaktors ermittelt wird, ob das Ultraschallempfangssignal

  - ein Störsignal ist oder
  - ein Ultraschallendesignal ist, das von einem anderen, dem Ultraschallempfänger nicht zugeordneten Ultraschallsender ausgesendet worden ist, oder
  - ein an einem Objekt reflektiertes Ultraschallendesignal eines dem Ultraschallempfänger nicht zugeordneten, anderen Ultraschallsenders ist, oder
  - ein an einem Objekt reflektiertes Ultraschallendesignal des dem Ultraschallempfänger zugeordneten Ultraschallsenders ist.

Der Grundgedanke des erfindungsgemäßen Ansatzes ist in der einfachen Berechnung einer Maßzahl, nämlich des Korrelationsfaktors zu sehen, die bzw. der angibt, wie stark das empfangene Ultraschallsignal mit dem zu erwartenden Ultraschallsignal übereinstimmt. Echos und die zugehörigen Korrelationen werden vorteilhafterweise gleichzeitig ausgewertet. Hierzu sieht die Erfindung vor, die Real- und Imaginäranteile eines durch eine I/Q-Demodulation erzeugten komplexen Signals zu normieren und die normierten Real- und Imaginär-Signalanteile mittels eines Matched-Filters (auch Optimalfilter genannt) zu filtern, wobei dieses Optimalfilter identisch zu demjenigen Optimalfilter ist, mit dem auch die Real- und Imaginär-Signale der I/Q-Demodulation gefiltert werden. Die auf diese Weise gefilterten normierten Real- und Imaginär-Signale werden zur Bildung des Betrags verrechnet, woraus sich dann unmittelbar der Korrelationskoeffizient bzw. -faktor ergibt. Dieses Verfahren lässt sich auf einfache Art und Weise schaltungstechnisch oder per Software implementieren, was den entscheidenden Vorteil der Erfindung ausmacht.

Durch die erfindungsgemäß vorgesehene Korrelation kann erkannt werden, ob ein Ultraschall-Echosignal durch Reflektion eines "eigenen" Ultraschallendesignals oder von einem Störsignal herrührt. Als "eigenes" Ultraschallendesignal wird dabei ein Signal verstanden, das von der Ultraschallmesseinrichtung stammt, also von demjenigen Ultraschallsender herrührt, dessen ausgesendetes Ultraschallendesignal als Reflektionssignal vom Ultraschallempfänger derselben Ultraschallmesseinrichtung empfangen wird.

Zweckmäßigerweise erfolgt der Vergleich auf Übereinstimmung des Ultraschallempfangssignals mit dem zu erwartenden Signal anhand der Frequenz des Ultraschallempfangssignals mit der Frequenz des Ultraschallsendesignals. Untersuchungen haben gezeigt, dass dann, wenn Ultraschallsender eingesetzt werden, die im zweistelligen kHz-Bereich senden, Frequenzdifferenzen von 1 kHz und vorzugsweise von 2 kHz ausreichend sind, um die Signale voneinander zu unterscheiden, und zwar anhand des Korrelationsfaktors.

In vorteilhafter Weiterbildung der Erfindung kann vorgesehen sein, dass zur Erkennung von weiter entfernten Objekten der Schwellwert für die Größe des Korrelationsfaktors mit zunehmender Empfangszeit des Ultraschallempfangssignals verringert wird.

Schließlich kann es auch von Vorteil sein, wenn parallel zur Korrelation zwecks Erkennung von Objekten die Signalamplitude der Hüllkurve des Ultraschallempfangssignals untersucht und mit einem Echo-Schwellwert verglichen wird.

Die Erfindung wird nachfolgend anhand eines Ausführungsbeispiels mit Bezug auf die Zeichnung näher erläutert.

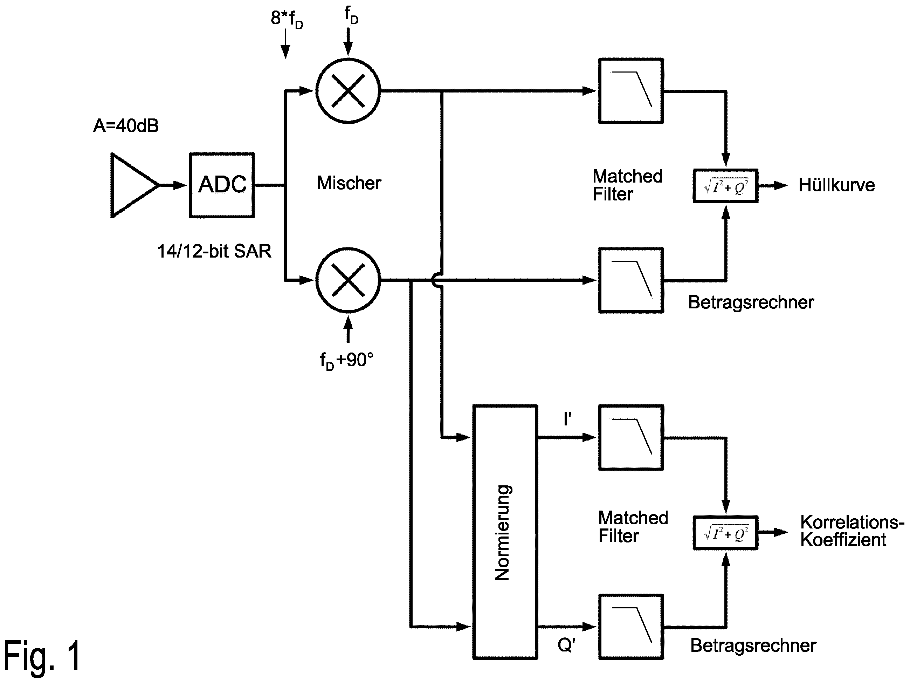

Erfindungsgemäß lässt sich im Signalpfad für die unmodulierten Pulse eines Ultraschall-Burstsendesignals ein Korrelationskoeffizient berechnen. Es hat sich herausgestellt, dass diese Vorgehensweise allgemein anwendbar ist. Für die Normierung der Amplitude stehen grundsätzlich verschiedene Möglichkeiten zu Verfügung. Eine bevorzugte ist in Fig. 1 gezeigt.

Bei der Normierung wird von den I/Q-Signalen einer I/Q-Demodulation ausgegangen, wie sie typischerweise im Anschluss an die Analog-Digital-Wandlung eines Ultraschallempfangssignals angewendet wird:

$$s = I + jQ$$

Aus diesem Signal wird die Phase berechnet:

$$\Phi = \arctan\left(\frac{Q}{I}\right)$$

Daraus werden dann die normierten I/Q-Signale (normiertes I-Signal = $I/\sqrt{I^2 + Q^2}$, normiertes Q-Signal = $Q/\sqrt{I^2 + Q^2}$) bestimmt als

$$I' = \cos(\Phi)$$

$$Q' = \sin(\Phi)$$

Diese normierten Signale I', Q' durchlaufen ein zum in Fig. 1 im oberen Zweig gezeigten ersten Matched-Filter identisch aufgebautes zweites Matched-Filter. Die Messungen zeigen, dass bereits eine Frequenzdifferenz von 1 kHz zu einem Echosignal mit einer schwachen Korrelation von ~0.7 führt. Ab einer Differenz von 2kHz ist die Korrelation <= 0.5. Diese Empfindlichkeit ist bei einer Dopplerverschiebung ab einer Geschwindigkeit von ~3 m/s zu beachten.

Akustisches Rauschen weist durch kurzzeitiges Anregen des Transducers eine hohe Korrelation auf, so dass akustische Rauschstörungen (Druckluftbremsen) nicht aussortiert werden können. Wird dagegen mit modulierten Signalen gearbeitet, werden die angeregten Eigenschwingungen des Transducers unterdrückt, da sie nicht mehr zum Korrelator passen.

Messungen

Messausrüstung: 58 kHz Transducer, 16 Pulse, Filter dritter Ordnung mit k=5, 75 mm Rohr auf 2 m 10°, Reflektor auf 5 m.

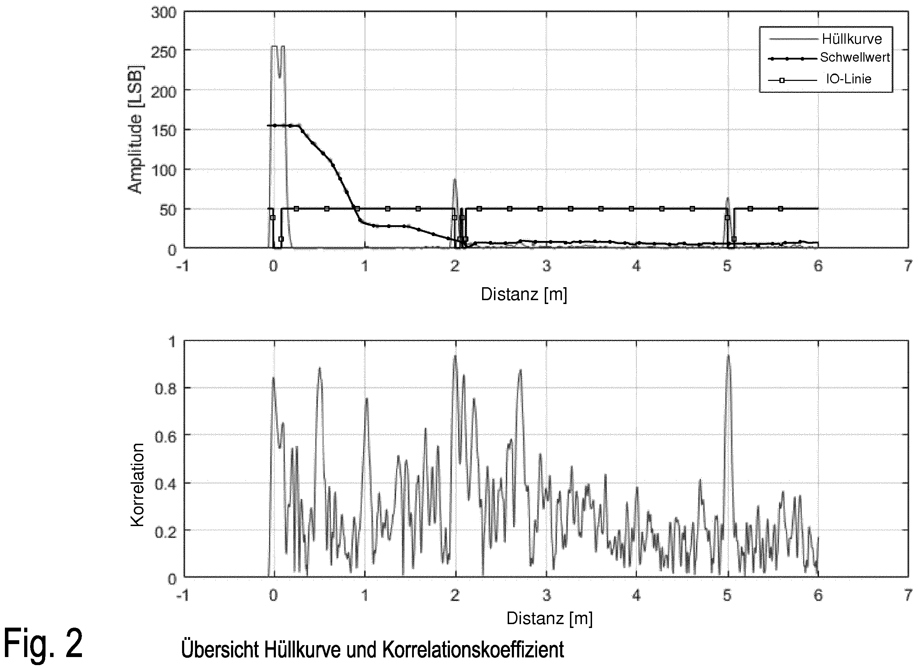

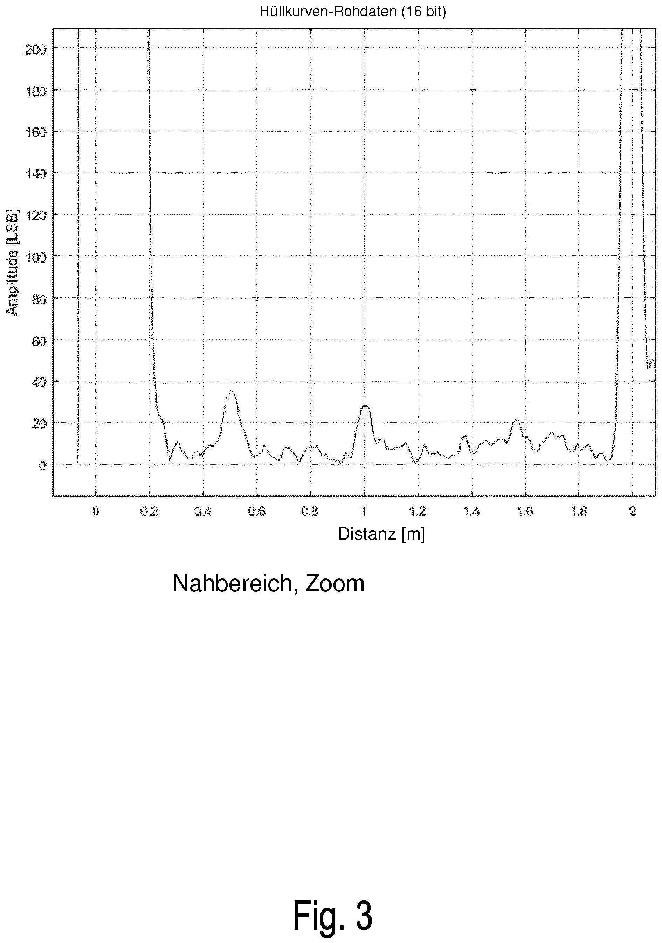

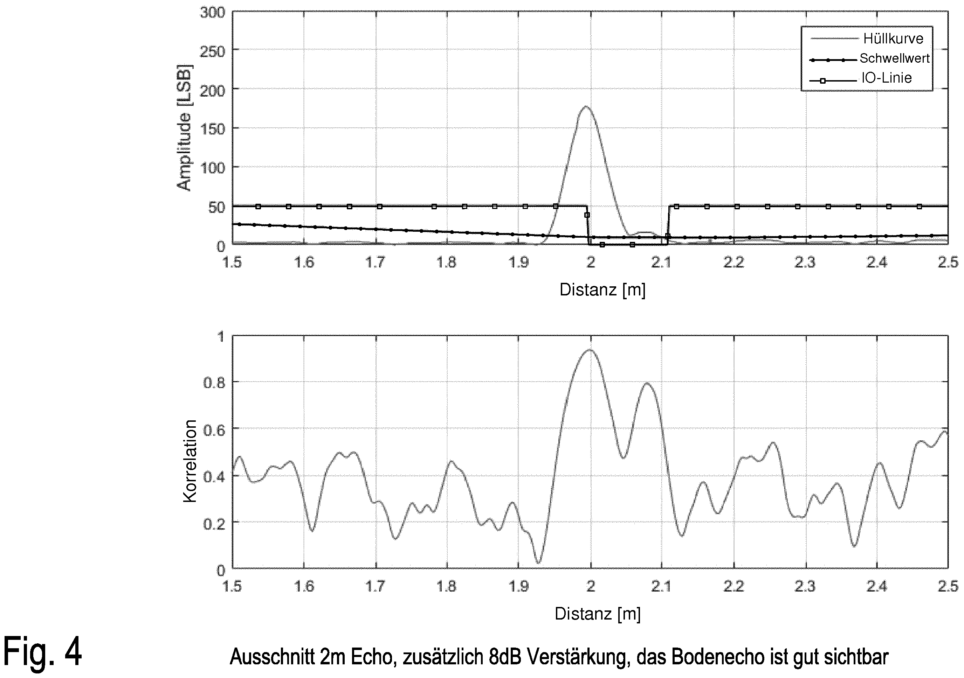

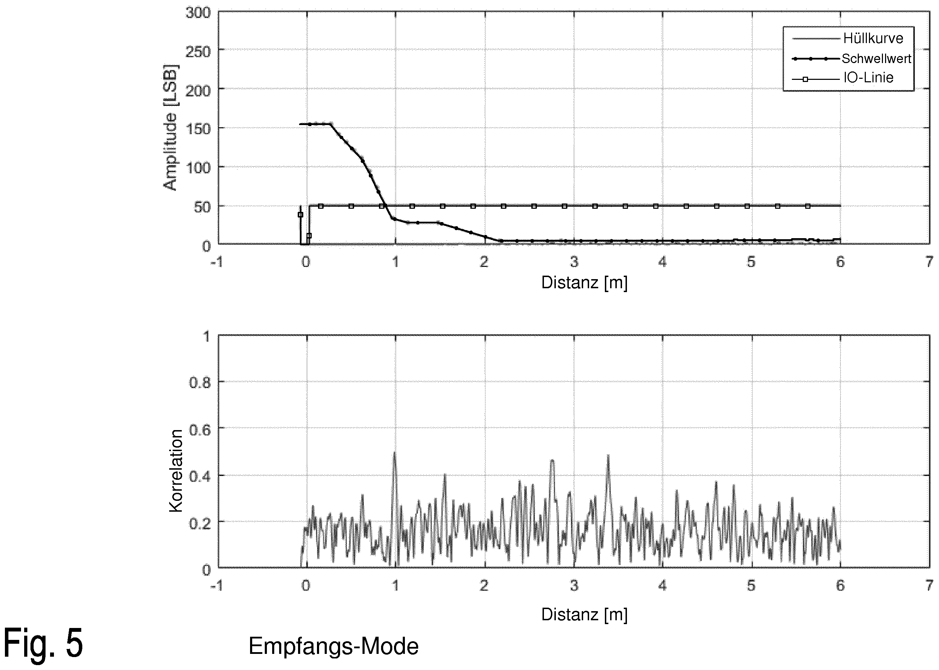

Der Signalpfad entspricht einer 8 bit-Hüllkurve (siehe Fig. 2). Die im Korrelationssignal sichtbaren Echos im Nahbereich sind zu gering, um angezeigt zu werden. Sie sind aber im Rohsignal eindeutig zu sehen (siehe Fign. 3, 4 und 5).

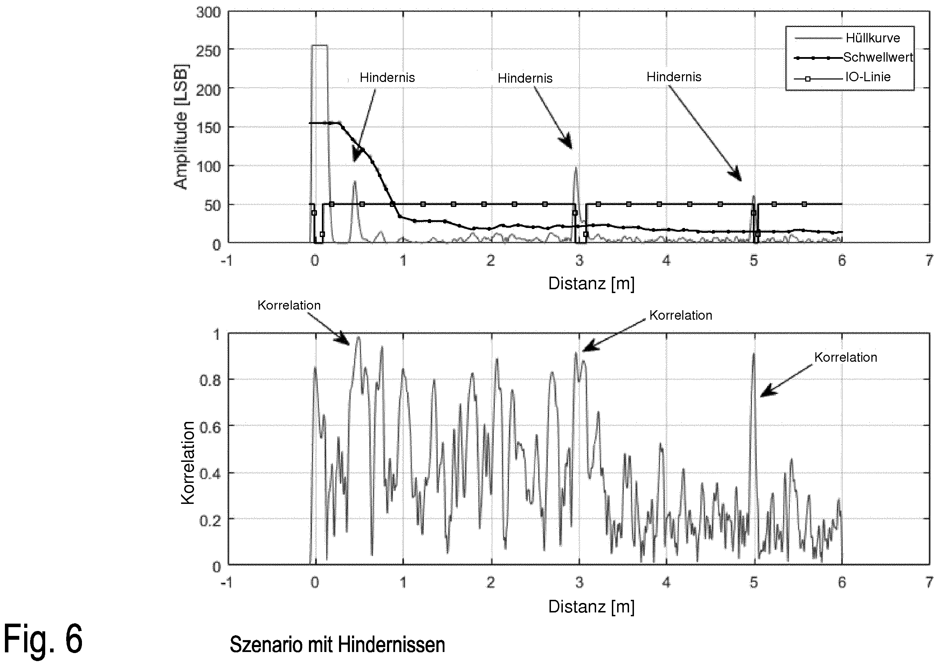

Das System wurde in einem festen Szenario betrieben. Die Hindernisse konnten anhand der Größe des Korrelationsfaktors eindeutig identifiziert werden (siehe Fig. 6).

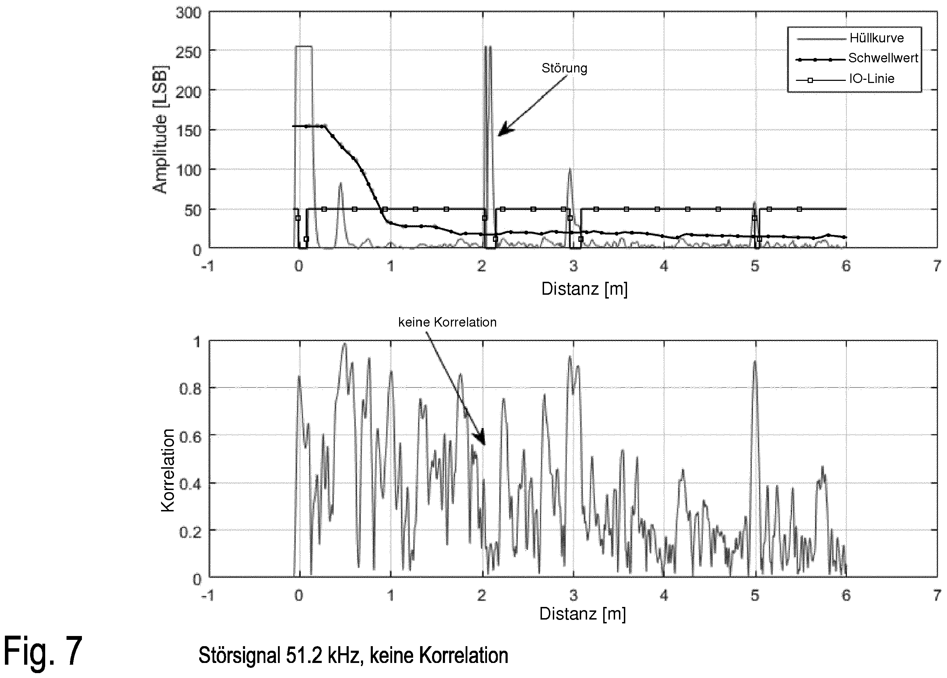

Das 58 kHz-Testsystem wurde von einem anderen System durch direkte Einstrahlung in den Sensor gestört (siehe Fig. 7). Die Korrelation war nicht mehr gegeben, so dass die Störung nicht als Echo bewertet wurde.

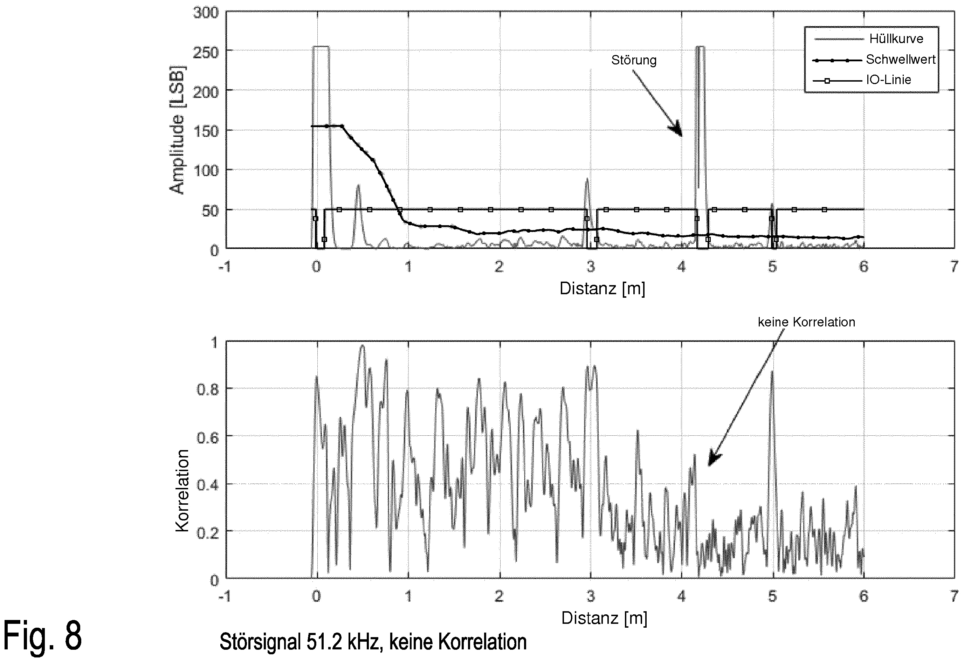

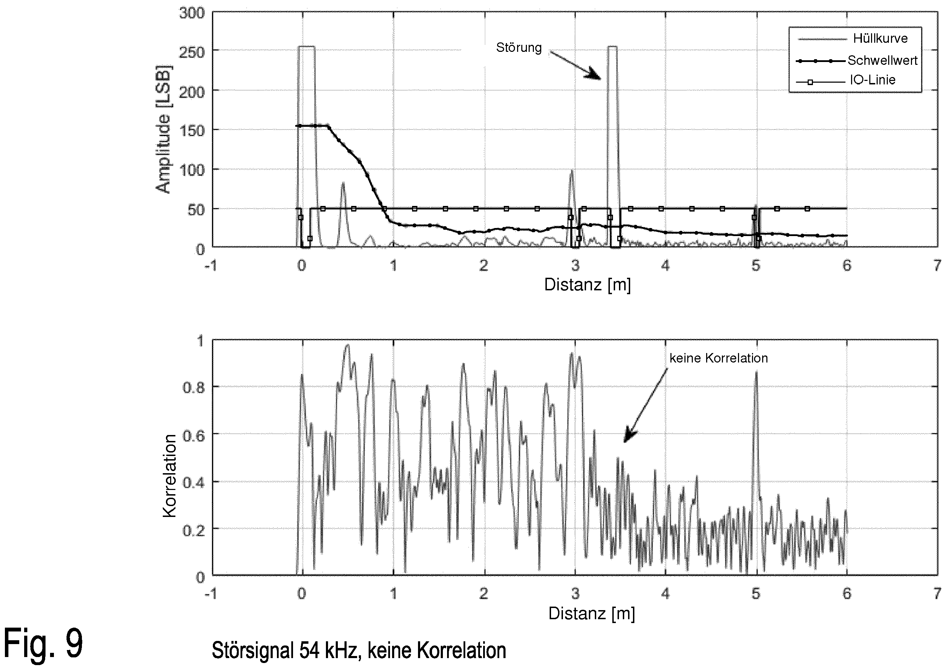

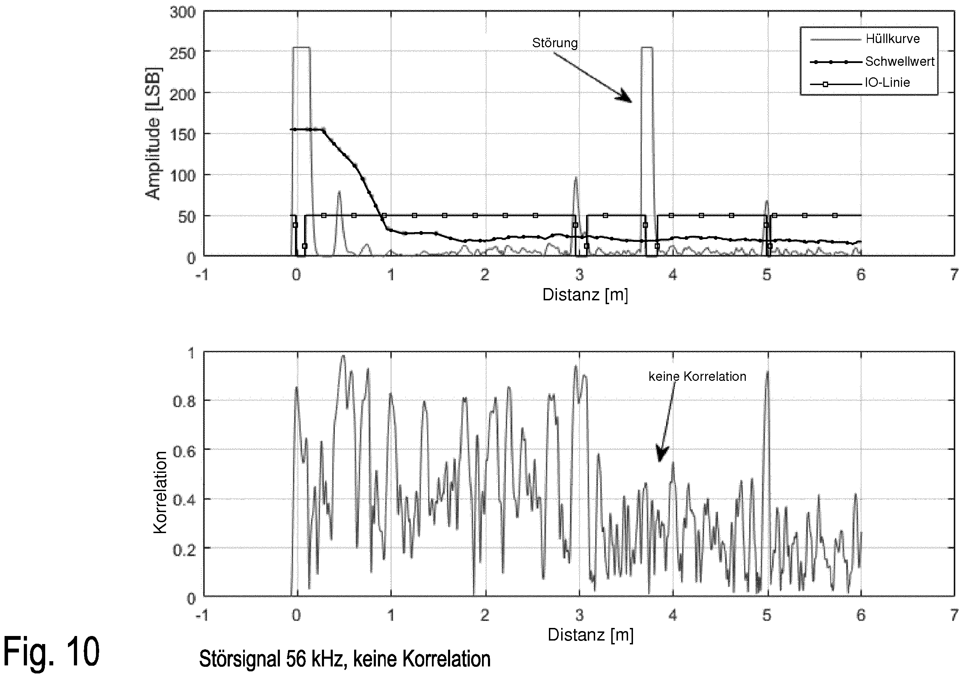

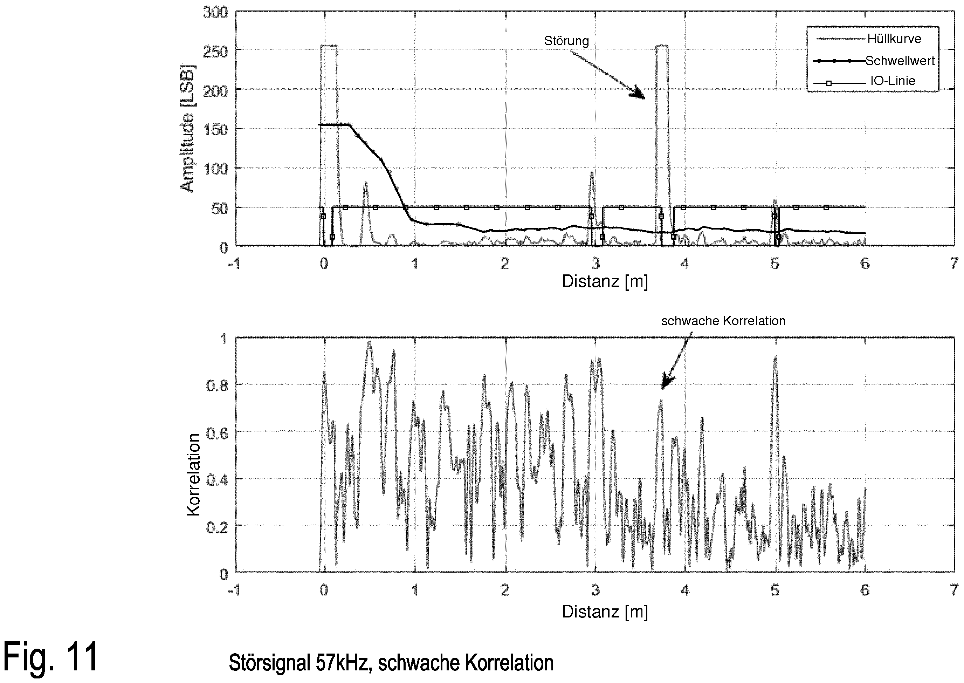

Das Störsignal drückt das durch Bodenechos hervorgerufene relative hohe Korrelationssignal bei ca. 2 m stark herunter (siehe Fign. 8 bis 11).

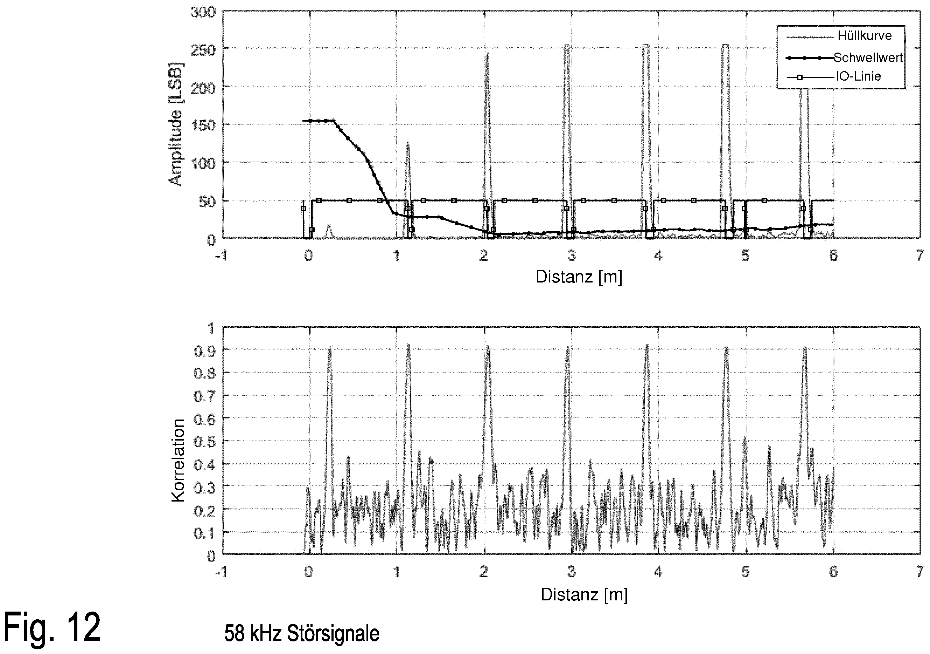

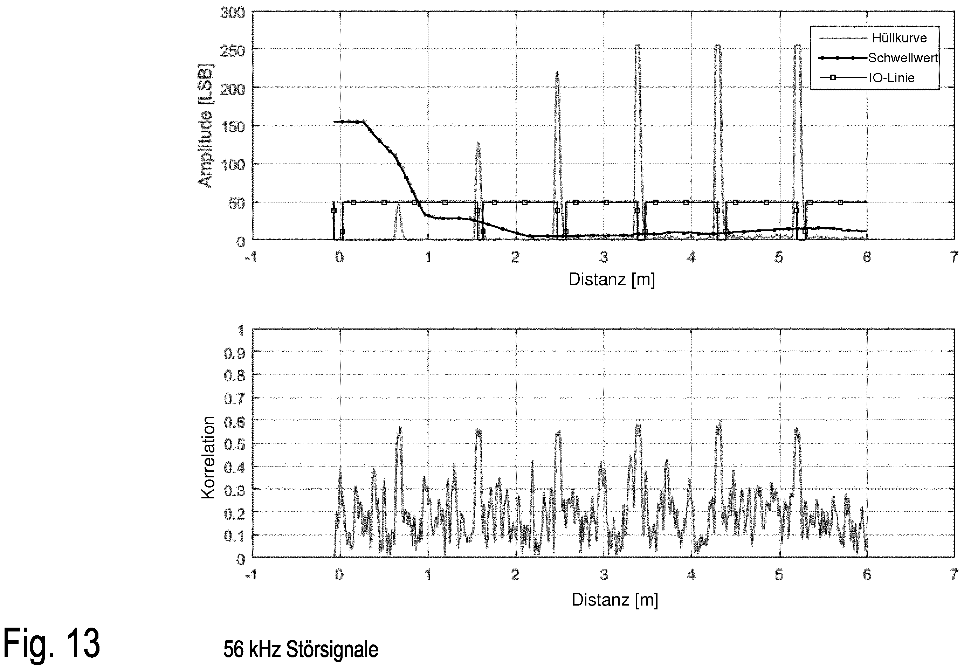

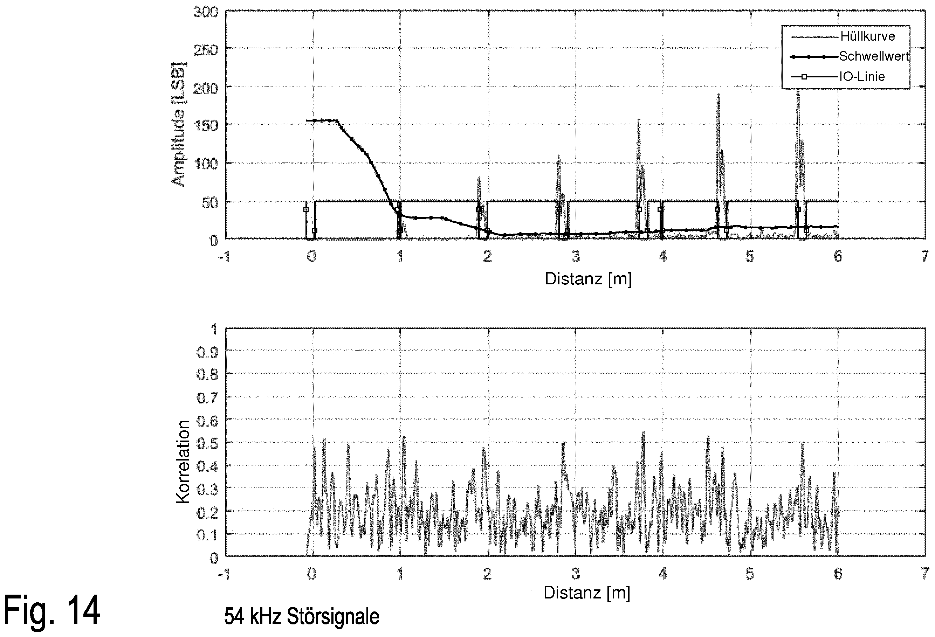

In den Fign. 12 bis 14 sind die Ergebnisse von Messungen gezeigt, die im Receive-Mode und mit einem Ultraschall-Generator durchgeführt wurden. Es wurden Burst-Signale mit 16 Pulse mit 5 ms Abstand gesendet.

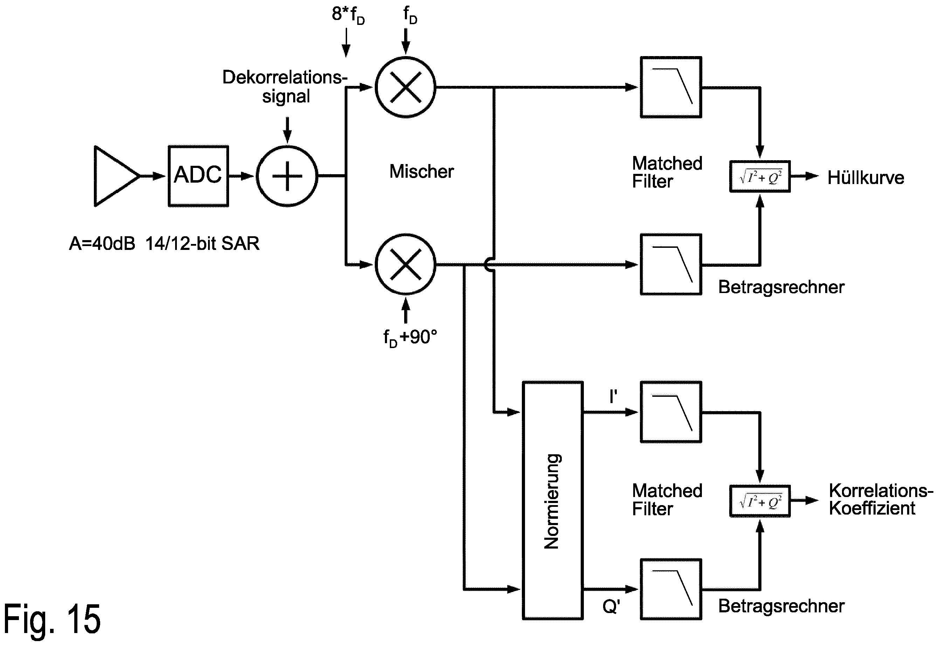

Aus den Korrelationssignalen ist ersichtlich, dass selbst im Messraum noch sehr viele Bodenechos vorhanden sind. Diese können mit einem zusätzlichen Signal, nämlich einem Dekorrelationssignal mit einer Frequenz außerhalb der Arbeitsfrequenz, reduziert werden. Dieses Signal kann als Analogsignal mit dem Ultraschallmesssignal kombiniert (z.B. "gemischt") werden. Eine digitale Implementierung der Einspeisung des Dekorrelationssignals hinter dem ADC, also im Digitalen, ist als vorteilhaft anzusehen (siehe Fig. 15), da sich damit viel einfacher Zusatzfunktionen implementieren lassen. Diese können darin bestehen, die Amplitude des Zusatzsignals über der Messdauer zu reduzieren, um nicht auch Echos im Fernbereich zu unterdrücken. Dies ist möglich, da im Fernbereich > 3 m praktisch keine Bodenechos auftreten.

Dies erleichtert die Zuordnung der Korrelationssignale. Nachteilig ist das Absinken des Korrelationssignals zu größeren Entfernungen auf Grund des geringeren Signal-Störverhältnisses. Dies muss bei der Auswertung durch einen variablen Schwellwert berücksichtigt werden.

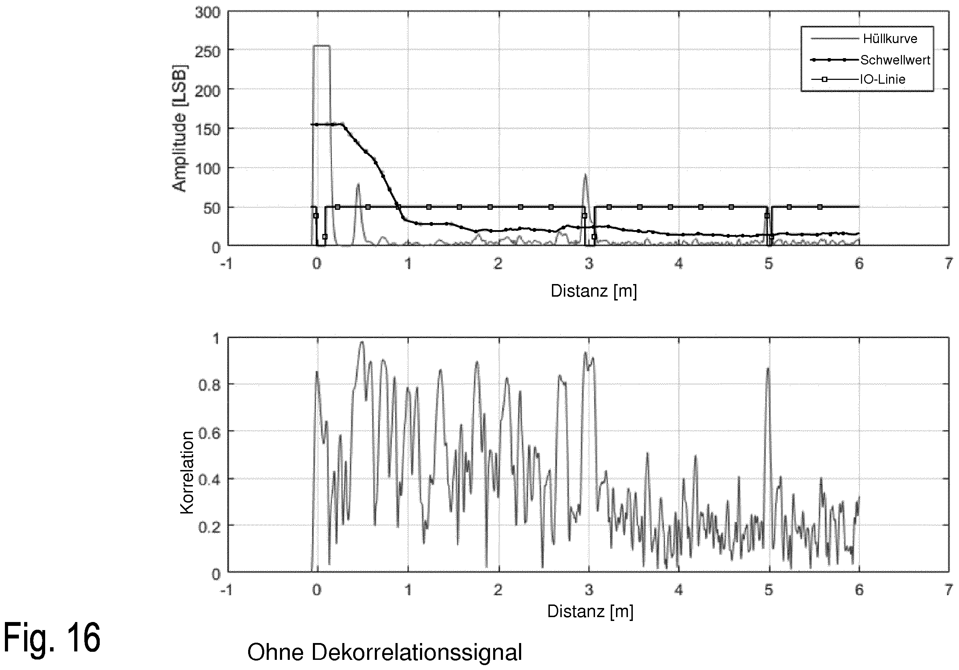

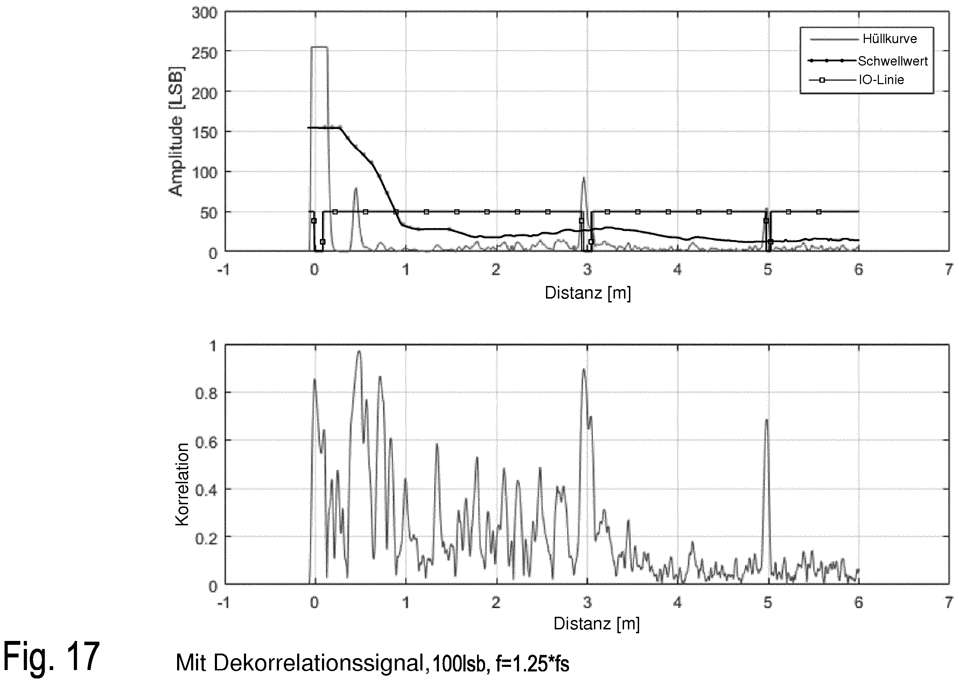

Andererseits wird ein vorhandenes größeres Störsignal das Korrelationssignal deutlich herunterdrücken (vergl. Fign. 6 und 7) und somit in der Regel für eine eindeutige Aussage sorgen (siehe Fign. 16 und 17).

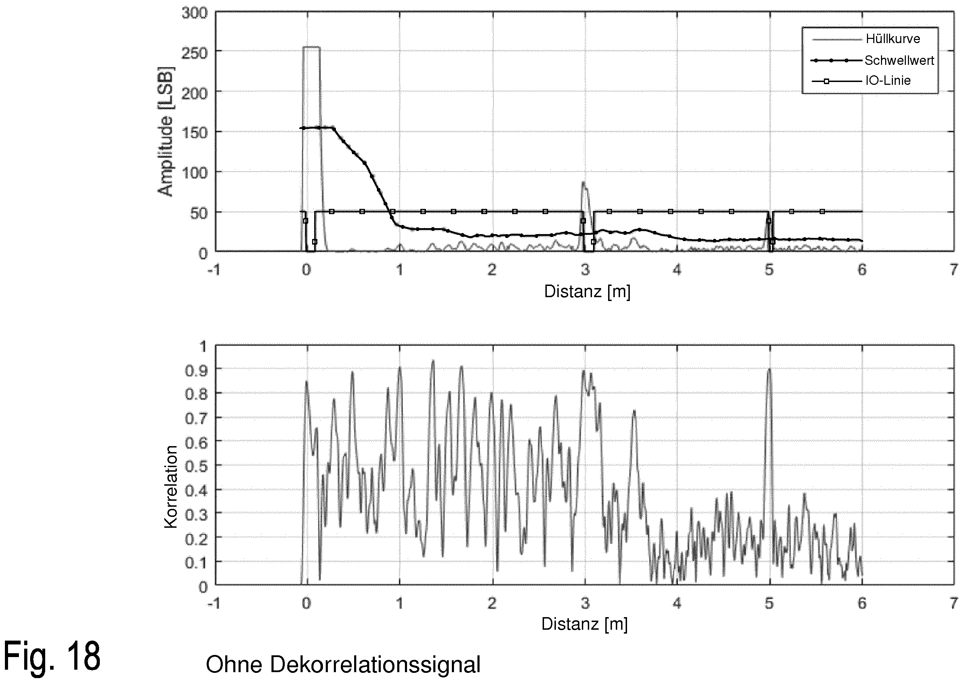

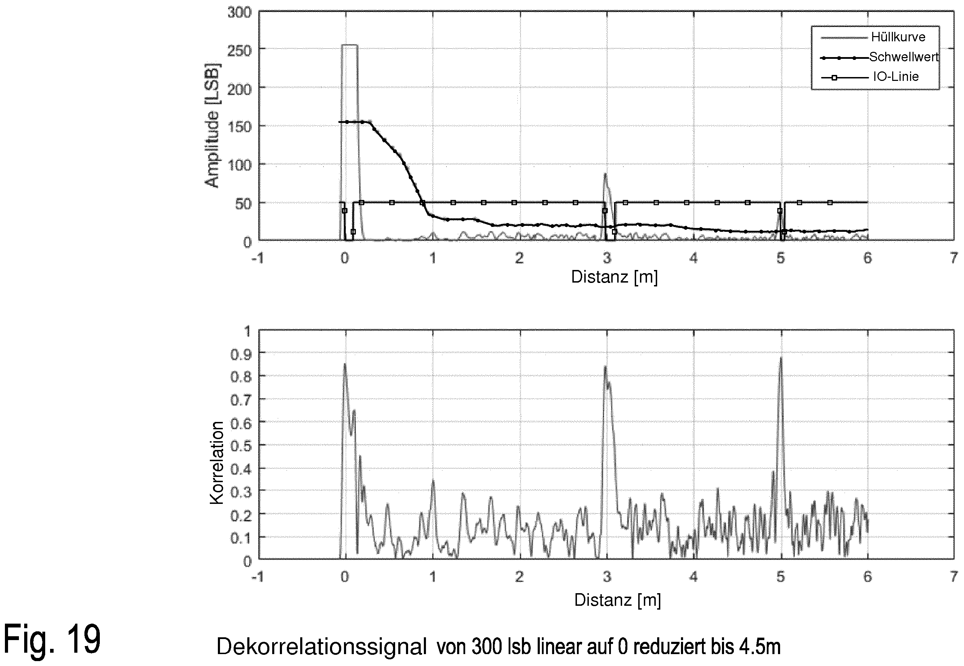

Wir die Amplitude der Korrelationsquelle linear abgesenkt, ergibt sich ein deutlich besseres Verhalten (siehe Fign. 18 und 19).

Wird bei der Auswertung die Korrelation mitberücksichtigt, können auf diese Weise fälschlich angezeigte Bodenechos unterdrückt werden.

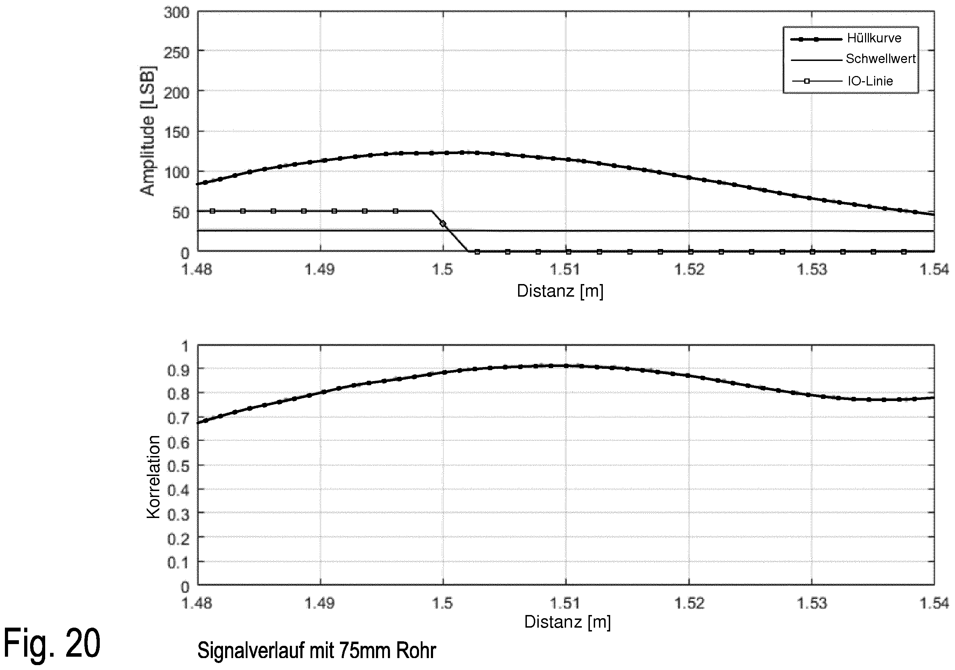

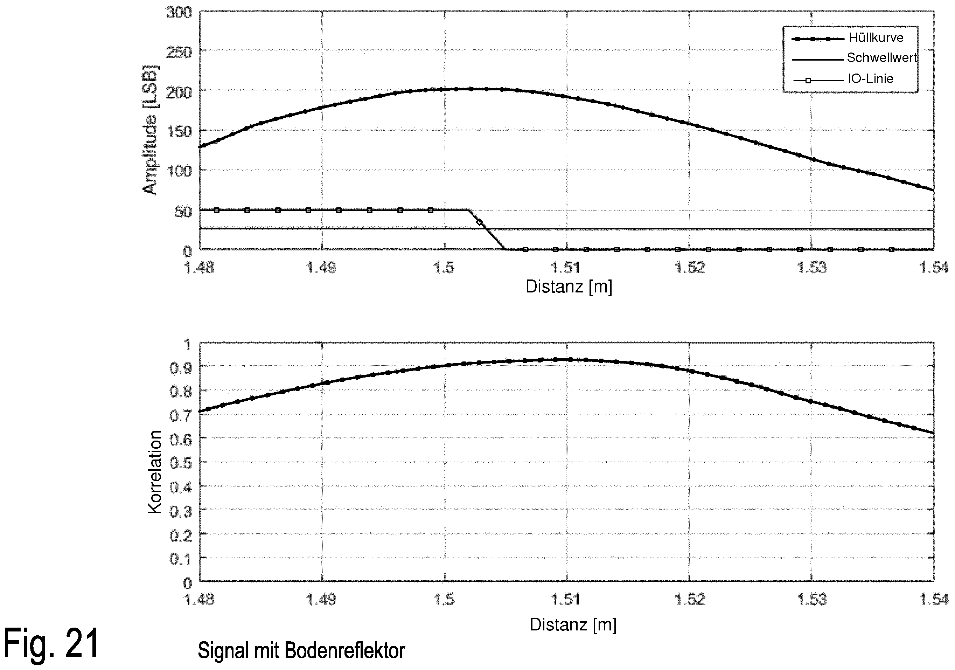

Auf Grund der etwas anderen Pulsform des normierten Signals hinkt das Maximum des Korrelationssignals ~3 Signalperioden hinterher. Dies kann bei der Auswertung berücksichtigt werden, indem die Hüllkurve um ~3 Abtastwerte verzögert wird (siehe Fign. 20 und 21).

**Patentansprüche**

1.  Verfahren zur Erkennung mindestens eines im Umfeld eines Fahrzeugs befindlichen Objekts anhand des Empfangs von von einem Sender ausgesandten und von dem Objekt reflektierten Ultraschallsignalen, wobei bei dem Verfahren

    - mindestens ein Ultraschallsender und ein diesem zugeordneter Ultraschallempfänger bereitgestellt wird,
    - der Ultraschallsender ein Ultraschallsendesignal aussendet,
    - der Ultraschallempfänger ein Ultraschallempfangssignal empfängt,
    - das Ultraschallempfangssignal mit dem Ultraschallsendesignal korreliert wird und ein Korrelationsfaktor ermittelt wird und
    - anhand der Größe des Korrelationsfaktors ermittelt wird, ob das Ultraschallempfangssignal

        - ein Störsignal ist oder
        - ein Ultraschallsendesignal ist, das von einem anderen, dem Ultraschallempfänger nicht zugeordneten Ultraschallsender ausgesendet worden ist, oder
        - ein an einem Objekt reflektiertes Ultraschallsendesignal eines dem Ultraschallempfänger nicht zugeordneten, anderen Ultraschallsenders ist, oder
        - ein an einem Objekt reflektiertes Ultraschallsendesignal des dem Ultraschallempfänger zugeordneten Ultraschallsenders ist,
**dadurch gekennzeichnet,**

    - **dass** der Korrelationsfaktor ermittelt wird, indem

        - das Ultraschallempfangssignal einer I/Q-Demodulation unterzogen wird, bei der ein komplexes Signal mit einem Realteil-Signal (I) und einem Imaginärteil-Signal (Q) entsteht, von denen jedes zur Bildung eines Hüllkurvensignals mittels jeweils eines ersten Optimalfilters gefiltert wird, woraufhin unter Verwendung der gefilterten Realteil- und Imaginärteil-Signale (I, Q) eine Betragsbildung erfolgt,
        - zusätzlich sowohl das Realteil-Signal (I) als auch das Imaginärteil-Signal (Q) jeweils normiert wird,
        - sowohl das normierte Realteil-Signal (I') als auch das normierte Imaginärteil-Signal (Q') mittels jeweils eines zweiten Optimalfilters gefiltert wird, wobei die ersten und die zweiten Optimalfilter im Wesentlichen identisch sind, und
        - der Korrelationsfaktor als Betrag des komplexen Signals aus den normierten Realteil- und Imaginärteil-Signalen (I', Q') ermittelt wird.

2.  Verfahren nach Anspruch 1, **dadurch gekennzeichnet, dass** das Ultraschallempfangssignal einer Analog-Digital-Wandlung unterzogen wird und dass das digitalisierte Ultraschallempfangssignal der I/Q-Demodulation unterzogen wird.

3.  Verfahren nach Anspruch 1 oder 2, **dadurch gekennzeichnet, dass** der Korrelationsfaktor beschreibt, inwieweit die Frequenz des Ultraschallsendesignals der Frequenz des Ultraschallempfangssignals gleicht.

4.  Verfahren nach einem der Ansprüche 1 bis 3, **dadurch gekennzeichnet, dass** zur Erkennung von weiter entfernten Objekten der Schwellwert für die Größe des Korrelationsfaktors mit zunehmender Empfangszeit des Ultraschallempfangssignals verringert wird.

5.  Verfahren nach einem der Ansprüche 1 bis 4, **dadurch gekennzeichnet, dass** parallel zur Korrelation zwecks Erkennung von Objekten die Signalamplitude der Hüllkurve des Ultraschallempfangssignals untersucht und mit einem Echo-Schwellwert verglichen wird.

**Claims**

1. A method for detecting at least one object located in the vicinity of a vehicle based on the reception of ultrasound signals transmitted by a transmitter and reflected by the object, wherein, in the method,

    - at least one ultrasound transmitter and an ultrasound receiver associated thereto are provided,
    - the ultrasound transmitter transmits an ultrasound transmission signal,
    - the ultrasound receiver receives an ultrasound reception signal,
    - the ultrasound reception signal is correlated with the ultrasound transmission signal and a correlation factor is determined, and
    - it is determined based on the size of the correlation factor, whether the ultrasound reception signal

        - is an interference signal or
        - an ultrasound signal transmitted by another ultrasound transmitter not associated to the ultrasound receiver, or
        - an ultrasound transmission signal of a another ultrasound transmitter not associated to the ultrasound receiver, which signal is reflected from an object, or
        - an ultrasound transmission signal of the ultrasound transmitter associated to the ultrasound receiver, which signal is reflected from an object, **characterized in**

    - **that** the correlation factor is determined by

        - the ultrasound reception signal being subjected to an I/Q demodulation in which a complex signal having a real part signal (I) and an imaginary part signal (Q) is formed, each of which is filtered by means of a respective first optimal filter to form an envelope signal, whereafter an absolute value is performed using the filtered real part and imaginary part signals (I, Q),
        - in addition, respectively normalizing both the real part signal (I) and the imaginary part signal (Q),
        - filtering both the normalized real part signal (I') and the normalized imaginary part signal (Q') by means of a respective second optimal filter, wherein the first and second optimal filters are essentially identical, and
        - determining the correlation factor as a value of the complex signal from the normalized real part and imaginary part signals (I', Q').

2. The method of claim 1, **characterized in that** the ultrasound reception signal is subjected to an analog/digital conversion, and that the digitized ultrasound reception signal is subjected to the I/Q demodulation.

3. The method of claim 1 or 2, **characterized in that** the correlation factor describes to what extent the frequency of the ultrasound transmission signal equals the frequency of the ultrasound reception signal.

4. The method of one of claims 1 to 3, **characterized in that** for the detection of more distant objects, the threshold value for the size of the correlation factor is reduced as the reception time of the ultrasound reception signal increases.

5. The method of one of claims 1 to 4, **characterized in that** in parallel with the correlation for the detection of objects, the signal amplitude of the envelope of the ultrasound reception signal is examined and compared to an echo threshold value.

**Revendications**

1. Procédé de détection d'au moins un objet se trouvant dans l'environnement d'un véhicule à l'aide de la réception de signaux ultrasonores émis depuis un émetteur et réfléchis par l'objet, dans lequel, lors du procédé

    - au moins un émetteur d'ultrasons et un récepteur d'ultrasons associé à celui-ci sont préparés,
    - l'émetteur d'ultrasons émet un signal d'émission ultrasonore,
    - le récepteur d'ultrasons reçoit un signal de réception ultrasonore,
    - le signal de réception ultrasonore est corrélé avec le signal d'émission ultrasonore et un facteur de corrélation est déterminé et
    - il est déterminé à l'aide de la grandeur du facteur de corrélation si le signal de réception ultrasonore est

        - un signal parasite ou
        - un signal d'émission ultrasonore qui a été émis par un autre émetteur d'ultrasons non associé au récepteur d'ultrasons, ou
        - un signal d'émission ultrasonore, réfléchi sur un objet, d'un autre émetteur d'ultrasons non associé au récepteur d'ultrasons, ou
        - un signal d'émission ultrasonore, réfléchi sur un objet, de l'émetteur d'ultrasons associé au récepteur d'ultrasons, **caractérisé en ce que**

- le facteur de corrélation est déterminé, où

- le signal de réception ultrasonore est soumis à une démodulation I/Q, lors de laquelle apparaît un signal complexe avec une partie réelle de signal (I) et une partie imaginaire de signal (Q), desquelles chacune est filtrée respectivement afin de former un signal d'enveloppe au moyen d'un premier filtre accordé, après quoi un calcul de module s'effectue en utilisant la partie réelle et la partie imaginaire filtrées du signal (I, Q),
- aussi bien la partie réelle de signal (I) que la partie imaginaire de signal (Q) sont en outre chacun normées,
- aussi bien la partie réelle de signal normée (I') que la partie imaginaire de signal normée (Q') sont chacune filtrées au moyen d'un deuxième filtre accordé, dans lequel le premier et le deuxième filtre accordé sont sensiblement identiques, et
- le facteur de corrélation est déterminé en tant que module du signal complexe à partir de la partie réelle normée et de la partie imaginaire normée du signal (I', Q').

2. Procédé selon la revendication 1, **caractérisé en ce que** le signal de réception ultrasonore est soumis à une conversion analogique-numérique et **en ce que** le signal de réception ultrasonore numérisé est soumis à la démodulation I/Q.

3. Procédé selon la revendication 1 ou 2, **caractérisé en ce que** le facteur de corrélation décrit dans quelle mesure la fréquence du signal d'émission ultrasonore est égale à la fréquence du signal de réception ultrasonore.

4. Procédé selon l'une des revendications 1 à 3, **caractérisé en ce que** pour détecter des objets plus éloignés la valeur seuil pour la grandeur du facteur de corrélation est diminuée lorsque le temps de réception du signal de réception ultrasonore s'accroît.

5. Procédé selon l'une des revendications 1 à 4, **caractérisé en ce que** parallèlement à la corrélation, l'amplitude de signal de l'enveloppe du signal de réception ultrasonore est analysée et comparée à une valeur seuil d'écho à des fins de détection d'objets.

Fig. 1

EP 3 658 955 B1

Fig. 2

Hüllkurven-Rohdaten (16 bit)

Nahbereich, Zoom

# Fig. 3

Fig. 4          Ausschnitt 2m Echo, zusätzlich 8dB Verstärkung, das Bodenecho ist gut sichtbar

EP 3 658 955 B1

Fig. 5

Fig. 6

Fig. 7    Störsignal 51.2 kHz, keine Korrelation

EP 3 658 955 B1

Störsignal 51.2 kHz, keine Korrelation

Fig. 8

Fig. 9          Störsignal 54 kHz, keine Korrelation

EP 3 658 955 B1

Fig. 10    Störsignal 56 kHz, keine Korrelation

EP 3 658 955 B1

Fig. 11    Störsignal 57kHz, schwache Korrelation

EP 3 658 955 B1

Fig. 12          58 kHz Störsignale

Fig. 13          56 kHz Störsignale

EP 3 658 955 B1

Fig. 14    54 kHz Störsignale

Fig. 15

Fig. 16    Ohne Dekorrelationssignal

EP 3 658 955 B1

Fig. 17    Mit Dekorrelationssignal, 100lsb, f=1.25*fs

Ohne Dekorrelationssignal

Fig. 18

Fig. 19    Dekorrelationssignal von 300 lsb linear auf 0 reduziert bis 4.5m

Fig. 20    Signalverlauf mit 75mm Rohr

Fig. 21     Signal mit Bodenreflektor

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012016834A1 A
- WO 2014108300A1 A
- DE 4433957 A
- DE 102012015967 A
- DE 102011085286 A
- US 2012314541 A
- DE 102011088346 A